# EUROPEAN PATENT APPLICATION

(11) **EP 4 546 472 A1**
(43) Date of publication of application: **30.04.2025**
(21) Application number: 23205092.2
(22) Date of filing: 23.10.2023
(51) Int. Cl.: H01M 8/04014, H01M 8/0432, H01M 8/0612, H01M 8/12

(54) **THERMAL MANAGEMENT OF HIGH-TEMPERATURE ELECTROCHEMICAL DEVICES**

(71) Applicant: SolydEra SA, 1400 Yverdon-les-Bains (CH)
(72) Inventor: ZACHARIE, Wuillemin, 1096 Cully (CH); WAEBER, Florian, 1266 Duillier (CH); DENEVE, Florian, 1614 Granges (CH); SCHERRER, Fabrice, 1038 Bercher (CH)
(74) Representative: Hepp Wenger Ryffel AG

(57) **Abstract**

The invention relates to an electrochemical device (1) comprising:
- at least one, preferably a plurality of, electrochemical cell (4) comprising a fuel electrode an oxygen electrode and a membrane,
- at least one fluid inlet line (2) leading to the fuel electrode of the at least one electrochemical cell (4),
- at least one fluid outlet line (3), exiting the fuel electrode of the at least one electrochemical cell (4),
- at least a first co-fluid line leading to the oxygen electrode of the at least one electrochemical cell,
- a reformer with an integrated heat exchanger (5) located upstream to the at least one electrochemical cell (4),
- at least one hot stream line (6) to provide heat to the fluid inlet line (2),
- at least two temperature sensors (T) for detecting the inlet temperature of the at least one fluid and/or for detecting the at least one outlet temperature of the at least one fluid, preferably at a reformer inlet side and/or a reformer outlet side.

A first pre-heater (7) is arranged between the reformer (5) and the at least one electrochemical cell (4). The fluid inlet line (2) is in fluid communication with the reformer (5) and/or first preheater (7) and the hot stream line (6) is in fluid communication with reformer (5) and/or the first preheater (7).

## Description

The invention relates to an electrochemical device and a heat management method for an electrochemical device according to the preamble of the independent claims.

The demand for hydrogen as an energy storage medium to accommodate the power demand and supply fluctuations in local distribution grids, as a vector in direct usage in industrial processes, and for automotive applications, is increasing. There is a need for a polygeneration system that can rapidly switch between different operation modes. This would provide a reliable path towards a sustainable environment with a large scale deployment of hydrogen, whilst the demand for power that can be generated from a variety of fuels is secured. In particular systems that are based on high-temperature electrochemical converters such as solid oxide cells are an attractive option, as these converters are potentially capable of rapidly switching between power producing, hydrogen producing, or simultaneous hydrogen and power producing operation modes. Their high operating temperature allows for reaching high system electrical efficiencies, *in-situ* catalyic conversion and subsequent electrochemical oxidation of various fuels such as natural gas, biogas, or ammonia, and the simultaneous production of high-temperature heat.

A particular challenge in the development of highly flexible polygeneration systems is the integration of the functional parts (e.g. steam generator, fuel reformer, electrochemical converter, hydrogen purification, offgas reuse) as well as the associated heat management. In particular, the electrochemical converter or electrochemical cell, which, due to the typically used materials and the high operating temperature, is sensitive to degradation if heat fluctuations are too strong. The electrochemical converter needs to be kept within specific temperature limits in order to ensure commercially acceptable lifetimes.

Operation within specific temperature limits can be realized by proper gas processing upstream the electrochemical reactor, that aims for preparing the gas with respect to composition and temperature, in relation to the expected heat production in the electrochemical reactor itself, preheating of the fluid streams, and heat dissipation from the reactor, for example by the fluid streams that are led through the electrochemical reactor. The heat production depends on the generated Joule heat due to resistive losses inside the electrochemical reactor and the electric current that is imposed to drive the electrochemical reactions, and the heat demand/production associated with the chemical reactions of the reactants that take place in the electrochemical reactor.

In order to illustrate the challenge with respect to the heat management associated with the preparation of reactants for a polygeneration system, the following three operation modes are considered, i.e. 1) one where it produces power from carbonaceous fuel in part load instead of full load, 2) one where it produces both power in full load and an additional hydrogen stream, and 3) one where it produces hydrogen from steam.

The first operation mode involves feeding a mix of carbonaceous fuel and steam to the reformer, such that the reformate that leaves the reformer contains a specific amount of unreformed methane, whilst the rest of the methane and, if present, the higher hydrocarbons are converted. Leaving part of the carbonaceous fuel unreformed in the reformer is advantageous as this allows for more heat consumption in the electrochemical reactor, which compensates for the Joule heat that is generated in the electrochemical converter, as explained above. In case operation under part load involves the supply of less feed flow, less heat is required for pre-reforming in order to obtain a preforming ratio similar to full load operation.

In the second case, reactants are being fed to the electrochemical reactor to simultaneously obtain a maximum rated amount of power, the limit of which is determined by the maximum tolerable thermal gradients in the electrochemical reactor, as well as a hydrogen stream by purifying the product stream that leaves the electrochemical by means of equipment located downstream the electrochemical reactor, for example with an arrangement of a water gas shift reactor with a pressure swing adsorption nit or with a temperature swing adsorption unit. In order to realize simultaneous production of power and hydrogen, the reactant conversion rate in the electrochemical reactor needs to be lowered to a degree that a sufficient amount of reactant is still available downstream the electrochemical reactor for the production of hydrogen. In case the power production is to be maintained, a higher feed flow has to be sent through the pre-reformer towards the electrochemical reactor. Consequently, more heat is required in the reformer to realize a similar reforming rate.

In the third case, it is the aim to produce hydrogen from steam in the electrochemical converter by means of electric power. In order to keep thermal gradients across the electrochemical reactor low, the electrochemical reactor is usually operated at an operating point close to where the amount of Joule heat compensates for the endothermic nature of the conversion from steam to hydrogen. This operating voltage is commonly called the thermoneutral voltage. The challenge is how to preheat this feed stream, as no reforming is envisaged.

The question is how to deal with all these different reactant streams in a polygeneration system. One solution lies in the pre-heating of the reactants with accurate conversion of the carbonaceous reactants in the reformer, adequate preheating of the reactants prior to entering the electrochemical reactor, as well as keeping temperature gradients in the electrochemical reactor within acceptable limits.

EP 3 020 088 B1 and US 8 920 997 B2 encounter the problem by accurately controlling the temperature of the reformer by exchanging heat with a heating fluid, commonly prior to entering the reformer, or whilst being converted in the reformer to obtain a reformate with a controllable amount of unconverted methane. EP 3 577 708 B1 suggests that the heating fluid may be a hot stream that exists in the system, or may be a fluid that receives heat from a burner such as those that combust redundant reactant that has passed the electrochemical converter, or in addition or even exclusively the use of so-called make-up gas and/or a combustible waste stream from a different chemical process.

A typical solution to preheating reactants to a particular temperature prior to entering the electrochemical reactor is the use of electric heaters. The disadvantage of using electric heaters in a polygeneration system, is, that it will impose a penalty on the system's electrical efficiency.

Another complication arrives from using the system to produce hydrogen from steam. In case the steam, which is generated in a boiler, has to be superheated by only a preheater, the preheater would be overdimensioned in comparison to the other operating modes, where the reactants have already been heated in the reformer. Overdimensioning the preheater for the sole reason of being able to superheat steam would make the system cost prohibitive.

Therefore, it is at least one objective of the present invention to overcome the drawbacks of the prior art. In particular, it is an objective to provide a simple and reliable electrochemical device which can be operated in an energy efficient manner with comparable lower costs. It also an objective of the present invention to provide a heat management method for an electrochemical device.

The objectives are solved by the subject-matter of the independent claims. Preferably embodiments are specified in the dependent claims.

A first aspect of the invention related to an electrochemical device. The electrochemical device comprises:
- at least one, preferably a plurality of, electrochemical cell comprising a fuel electrode, an oxygen electrode and a membrane,
- at least one fluid inlet line leading to the fuel electrode of the at least one electrochemical cell,
- at least one fluid outlet line, exiting the fuel electrode of the at least one electrochemical cell,
- a reformer with an integrated heat exchanger located upstream to the at least one electrochemical cell,
- at least a hot stream line to provide heat to the fluid inlet line,
- at least two temperature sensors for detecting the inlet temperature of the at least one fluid and/or for detecting the at least one outlet temperature of the at least one fluid, preferably at a reformer inlet side and/or a reformer outlet side.

A first pre-heater is arranged between the reformer and the at least one electrochemical cell. The fluid inlet line is in fluid communication with the reformer and/or the first preheater and the hot stream line is in fluid communication with the reformer and/or the first pre-heater.

The reformer can be used to pre-heat the at least one fluid before feeding the at least one fluid to the electrochemical cell. The hot stream line is preferably a line that comprises a hot fluid such as combustion gas, or heated mineral oil. The hot stream line provides heat to the first pre-heater and/or reformer which can be transferred to the at least one fluid so that the fluid receives a higher temperature before entering the electrochemical cell for more efficiency.

The electrochemical device according to the invention has the advantage that it is operatable without additional electrical heating. Thus, the device operates more energy efficiently than commonly known devices.

Preferably, the device comprises a plurality of electrochemical cells in the form of a stack. The stack, or a plurality of stacks, are enclosed in a housing forming an electrochemical reactor.

The first pre-heater is preferably a first heat exchanger which can allow the heat transfer between fluid lines of different heat in the device, in particular between the at least one fluid line and the hot stream line. Additionally, or alternatively, the at least one fluid line can carry offgas that exited the electrochemical reactor and may be led to the first pre-heater allowing heat exchange between the at least one fluid inlet line and the at least one fluid outlet line.

Advantageously, the fluid inlet line comprises at least one temperature sensor at the first pre-heater inlet side and/or the first pre-heater outlet side. Most preferably, the temperature sensors are arranged at the inlet side and the outlet side. This way, the temperature change of the fluid when passing the first pre-heater can be determined. The temperature difference allows the adjustment of heat provided to the first pre-heater such that the at least one fluid is heated to a temperature suitable for the electrochemical cell. Hence by providing more or less heat to the first pre-heater, the temperature of the at least one fluid can be controlled.

The first hot stream line can be a split line with a first flow path to the reformer and with a second flow path to the first pre-heater and/or a second pre-heater. In that case, the hot stream line allows heat transfer in the reformer and in the first pre-heater and/or second pre-heater, thus allowing heat exchange in at least two units.

The first and second flow paths are preferably arranged such that heat exchange between the fluid inlet line and the first co-fluid line in the reformer and/or first or second preheater is allowed.

Advantageously, at least one valve for controlling the flow volume in the first and second flow paths is located in the hot stream line downstream of the reformer and the first pre-heater and/or second pre-heater. This way, the valve is located in the colder region of the electrochemical device, since the downstream region of the reformer and the first or second pre-heater refers to a position after heat transfer. There can be valves downstream to the reformer and/or first pre-heater and/or second pre-heater. Valves in the colder region of the device are less prone to degradation. Cheaper valves can thus be used, making the system more cost efficient.

The valves are especially suitable to control the flow volume via pressure drop. Thus, the split hot stream line and the valves can represent a controllable split. By disposing a controllable valve in at least one of the stream lines downstream of the reformer or pre-heaters, accurate control of the hot fluid in the hot stream is possible.

Advantageously, the reformer with integrated heat exchange function is used to control the composition of the outcoming reactant fluid or fluid mixture when it is fed with a mixture of carbonaceous fuel and steam in order to avoid strong thermal gradients in the electrochemical converter.

Preferably, the device can comprise a co-feed line to provide a co-fluid, preferably an oxidant or sweep-gas, to the at least one electrochemical cell.

In one preferred embodiment, the co-feed line can be arranged with regard to the hot stream line such that a heat transfer between the hot stream line and the co-feed line is possible. Heat transfer may be realised by the second pre-heater. In this particular arrangement, the second pre-heater is arranged in the split hot stream line and the at least one hot stream is preferably not directed through the first pre-heater but through the second preheater only. This has the advantage that the co-fluid is also heated to a temperature preferred by the electrochemical cell. The second pre-heater can be a second heat exchanger. In this arrangement, it may be also possible, that the fluid outlet line is leading to the first pre-heater, carrying hot offgas from the electrolyzer cell and allowing heat exchange between the at least one fluid inlet line and the at least one fluid outlet line in the first pre-heater.

This arrangement is advantageous since it allows the heating of the at least one fluid and the at least one co-fluid with two independent flow lines. The at least one fluid is preferably heated by offgas while the co-fluid is heated by the hot stream. It may also be possible that the at least on fluid is additionally heated by the hot stream.

Temperature sensors may also be arranged at an inlet side and/or outlet side of the second pre-heater to determine the heat change of the co-fluid and/or the hot stream.

The device can be operated in the following operation modes: power and steam conversion to hydrogen, carbonaceous fuel to power, carbonaceous fuel to power and hydrogen, carbonaceous fuel to hydrogen. Thus, the device can be considered a polygeneration system allowing switching between different operation modes.

The temperature sensors are preferably connected to a feedback control loop. The feedback-control loop can control the device by changing an input parameter, for example a gauge indicating to what extent a valve is opened, or a flow controller; and by measuring its effect on an output parameter, e.g. the temperature. Preferably, for the output parameter a lower limit and an upper limit is defined.

Most preferably, the at least one electrochemical cell is a reversible solid oxide cell. These cells are operatable at high temperatures and tolerate a wide range of operating modes.

A second aspect of the invention refers to a heat management method for an electrochemical device, preferably an electrochemical device as previously described. The method comprises the steps of:
a) Providing an electrochemical device. The device comprises:
   - at least one, preferably a plurality of, electrochemical cell comprising a fuel electrode, an oxygen electrode and a membrane,
   - at least one fluid inlet line leading to the fuel electrode of the at least one electrochemical cell,
   - at least one fluid outlet line, exiting the fuel electrode of the at least one electrochemical cell,
   - a reformer with an integrated heat exchanger located upstream to the at least one electrochemical cell,
   - at least one hot stream line to provide heat to the fluid inlet line,
   - at least two temperature sensors for detecting the inlet temperature of the at least one fluid and/or for detecting the at least one outlet temperature of the at least one fluid, preferably at a reformer inlet side and/or a reformer outlet side,
   - a first pre-heater arranged between the reformer and the at least one electrochemical cell, wherein the fluid inlet line is in fluid communication with the reformer and/or the first preheater and wherein the hot stream line is in fluid communication with the reformer and/or the first pre-heater.
b) Providing at least one fluid to the reformer and/or the first pre-heater,
c) Providing at least one hot stream to the reformer and/or the first pre-heater,
d) Allowing heat exchange between the at least one fluid and the hot stream in the reformer and/or the first pre-heater to heat the at least one fluid,
e) Optionally allowing heat exchange between the hot stream and a co-fluid,
f) Providing the heated at least one fluid to the at least one electrochemical cell.

The method allows the heating of fluids without the need of electrical heaters which makes the system more efficient. The method further allows control of the fluid temperatures and the fluid composition.

The method can further comprise the step of determining the temperature of the at least one fluid before entering the reformer at the reformer's inlet side and determining the temperature of the at least one fluid at the reformers outlet side and/or determining the temperature of the at least one fluid before entering the first pre-heater at the first preheater's inlet side and determining the temperature of the at least one fluid at the first preheater's outlet side to determine the amount of hot stream supplied to the reformer and/or to the first pre-heater.

This step has the advantage that it can be determined whether more or less heat is required in the reformer and/or pre-heater to sufficiently heat the fluids. Based on the outcome the heat supply can be adjusted.

Advantageously, the hot stream is split and provided to the reformer and the first pre-heater and/or a second pre-heater. Hence, a second pre-heater can be present. The second pre-heater can be used to heat a co-fluid with the hot stream as described above. The hot stream may be, for example, combustion gas or heated mineral oil. Thus, the hot stream can preferably either be used to heat the at least one fluid at the reformer and/or the first pre-heater or to heat the at least one fluid at the reformer and the co-fluid at the second pre-heater. in the latter case, the at least one fluid line may be additionally heated by an off gas provided via the at least one fluid outlet line to the first pre-heater.

Most preferably, the flow volume of the hot stream provided to the reformer and/or the first pre-heater and/or the second pre-heater is adjusted by at least one valve, located in the hot stream line downstream to the reformer and/or the first preheater and/or the second pre-heater. As described above, this region allows the implementation of cheaper valves, providing a cost efficient device and method.

The method can comprise the step of converting carbonaceous fuel to power and hydrogen or converting carbonaceous fuel to hydrogen or converting power and steam to hydrogen. The electrochemical cell can operate as an electrolyzer. Carbonaceous fuel can be an gaseaous carbon compound such as carbon monoxide, carbon dioxide, methane or mixtures of carbonaceous gases. Typically a mixture of gases is provides that contain carbon monoxide, carbon dioxide and methane.

Alternatively, the method can comprise the step of converting carbonaceous fuel to power/electricity. In this case, the device is acting a fuel cell.

Preferably, a sweep gas as co-fluid is supplied to the at least one electrochemical cell. As described above, the co-fluid can be heated by a second pre-heater. The co-fluid can be an oxidant containing fluid. The co-fluid may be provided to the at least one electrochemical cell.

The conversion of power and steam to hydrogen is preferably operated under exothermic conditions, i.e. where the heat in the fluid that exits the electrochemical reactor is sufficient to preheat the fluid entering the electrochemical cell. A too high heat production in the electrochemical reactor would lead to higher thermal gradients in the electrochemical reactor, and is therefore less preferable.

Advantageously, the at least one electrochemical cell is a reversible solid oxide cell.

In case the at least one fluid consists of carbonaceous fuel, with the aim to produce electric power, the exhaust stream in the fluid exit line can be vented or can contribute to preheating the hot fluid. In case the aim is to also obtain a hydrogen stream from carbonaceous fuel, downstream gas processing can take place. This can include a water-gas shift reactor, either operated adiabatically or temperature-controlled, to improve the hydrogen content in the gas stream. It can further include a reactor to separate the hydrogen from other gases, for example a reactor that uses pressure swing adsorption.

Exhaust streams define the fluid or fluidic mixtures exiting the electrochemical cell or reactor in case of a plurality of cells in the form of one or more stacks.

Depending on the operation mode and the adopted arrangement of the electrochemical device, the exhaust streams may be used to produce the hot fluid of the hot stream, for example in a burner. In addition, or alternatively, fresh fuel, a combustible waste stream from a different chemical process, and/or fresh air may be used to produce the hot fluid. In case a burner is used to produce the hot fluid, there is preferably no valve disposed between the burner and the hot stream line that branches off of it, as it may cause instabilities in the operation of the burner and/or lead to safety hazards.

The invention will be described in more detail based on exemplary embodiments. The invention is not limited to these specific embodiments. Same reference signs denote the same elements in the figures. It shows:
- Figure 1: A schematic view of a first embodiment of an electrochemical device with a process flow diagram according to the invention.
- Figure 2: A schematic view of a second embodiment of an electrochemical device with a process flow diagram according to the invention.
- Figure 3: A schematic view of a third embodiment of an electrochemical device with a process flow diagram according to the invention.
- Figure 4: The embodiment of figure 3 including temperature sensors and controllable valves.

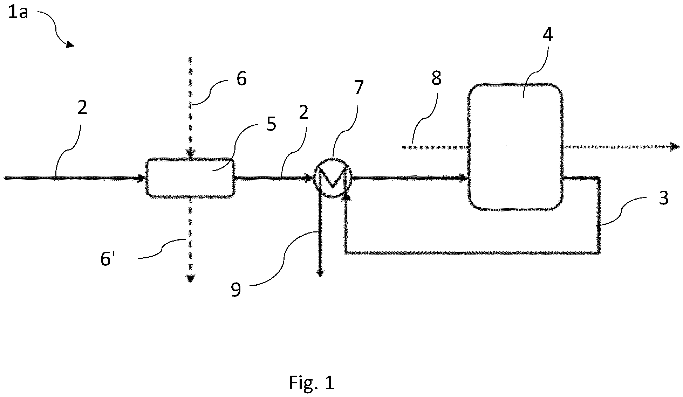

Figure 1 shows a schematic view of a first embodiment of an electrochemical device 1a with a first process flow diagram according to the invention. A fluid inlet line 2 is leading at least one fluid to a reformer 5 with an integrated heat exchanger, also named herein after as reformer heat exchanger. There, heat exchange between the at least one fluid and a hot stream from a hot stream line 6 takes place. A hot stream line 6' exits the reformer 5 and carries a hot stream with a lower temperature than the hot stream entering the reformer 5. The fluid in the fluid inlet line 2 enters a first pre-heater 7, arranged between the reformer 5 and an electrochemical reactor 4, where the fluid can further be heated to a temperature suitable for entering the electrochemical reactor 4 comprising at least one electrochemical cell. The heat for the pre-heater 7 can be provided through a fluid outline line 3 and offgas or exhaust stream contained therein and directed to the pre-heater 7. After heat exchange, the remaining fluid is vented through exit line 9. The device also has a co-feed line 8 feeding a co-fluid to the electrochemical reactor 4. The fuel processing downstream the electrochemical reactor 4 that is required to obtain a hydrogen stream from carbonaceous fuel is not shown.

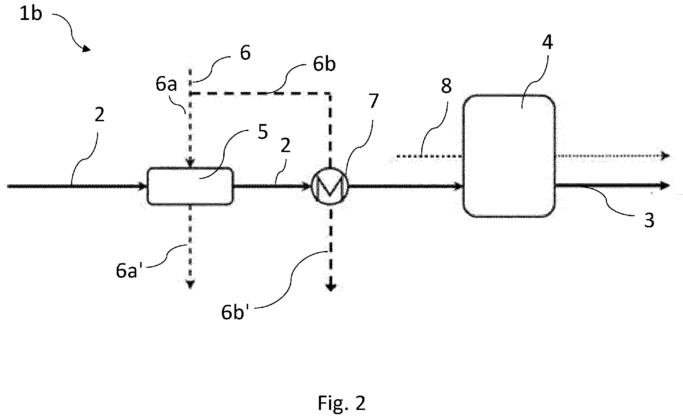

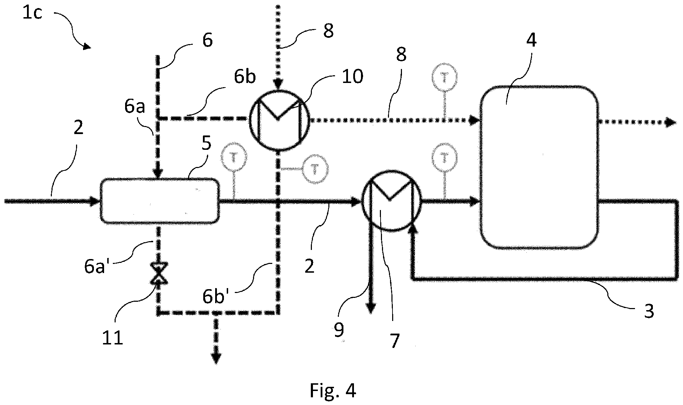

Figure 2 shows a second embodiment of a device 1b and a process flow diagram. An arrangement is shown, where both the reformer 5 and the first pre-heater 7 receive heat from a hot fluid. The hot stream line 6 is split into two pathways 6a and 6b. The first path 6a is leading to the reformer 5 and the second path 6b is leading to the first pre-heater 7. This allows to pre-heat the at least one fluid in the at least one fluid inlet line 2 in a more dynamic way and allows the electrochemical reactor 4 to operate at conditions where heat production in the stack deviates from the heat requirement in the first pre-heater 7. This allows the electrochemical reactor 4 to be operated in thermoneutral or endothermic conditions when hydrogen is produced from steam. After heat transfer a reformer exit line 6a' carries a hot fluid with a lower temperature than the temperature when entering the reformer 5. After heat transfer a pre-heater exit line 6b' carries the hot fluid in a temperature below the temperature when entering the pre-heater 7. The amount of hot fluid directed via path 6a or 6b can be adjusted by at least one valve (not shown, see figure 4) arranged in the reformer exit line 6a' and/or the pre-heater exit line 6b'. The arrangement also shows a co-feed line 8 carrying an additional fluid.

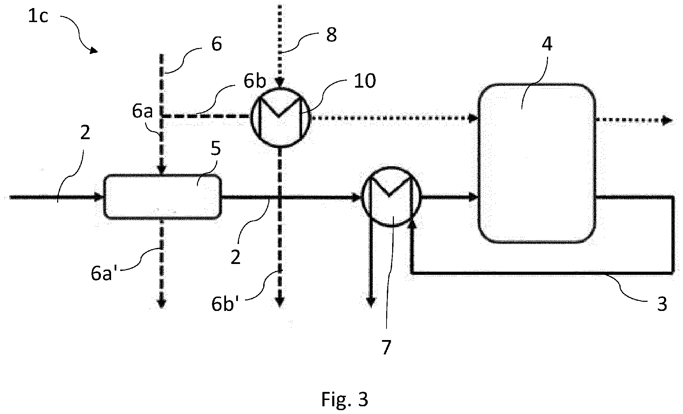

Figure 3 shows an alternative third arrangement 1c process fluid diagram, where the hot fluid is split by split lines 6a an 6b in order to exchange heat with the at least one fluid entering the reformer 5 via the fluid inlet line 2 and the co-fluid entering a second pre-heater 10 via co-feed line 8. The fluid in the fluid inlet line 2 can be further pre-heated by the first preheater 7 which is preferably a heat exchanger. The heat for the first pre-heater 7 is provided by the exhausted feed in the fluid exit line 3. This system allows for pre-heating the co-fluid in order to lower the temperature differential between the two incoming feed streams, meaning the at least one fluid and the at least one co-fluid. This results in smaller temperature differences within the electrochemical reactor 4. In case the at least one fluid in the fluid inlet line 2 consists of carbonaceous fuel, with the aim to produce electric power, the exhaust stream in the fluid exit line 3 could be vented or could contribute to the generation of the hot fluid. In case the aim is to also obtain a hydrogen stream from carbonaceous fuel, downstream gas processing (not shown) would take place. This includes a water-gas shift reactor, either operated adiabatically or temperature-controlled, to improve the hydrogen content in the gas stream. It could further include a reactor to separate the hydrogen from other gases, for example a reactor that uses pressure swing adsorption.

Figure 4 shows the arrangement based on figure 3 including temperature sensors T and controllable valves 11 disposed in at least one of the two hot stream lines to control the heat that is exchanged with the reformer heat exchanger 5 and with the co-fluid in the co-feed line 8. The control of the device 1c in figure 4 is further explained by illustrating a situation where the system goes from an operation mode where only power is produced from carbonaceous fuel to an operation mode where both power and hydrogen are produced from carbonaceous fuel, whilst keeping the amount of power that is produced the same.

In the first operating mode, a hot stream is provided to the reformer heat exchanger 5 such that the at least one fluid, herein after named feed gas, with known composition, reaches a temperature where, according to, for example, thermodynamic calculations, a specific degree of reforming is achieved. The extent to which the feed gas is reformed is chosen based on the amount of reforming that is aimed for in the electrochemical reactor 4, such that the temperature gradient, which relates to the Joule heat generated in the electrochemical reactor 4 and the endothermic conversion of the remaining hydrocarbons that were not converted in the reformer 5, is within acceptable limits. The amount of hot stream that is provided to the reformer heat exchanger 5 is controlled by a feed-back loop that, based on the temperature of the feed gas after leaving the reformer heat exchanger 5, acts on the valve 11 that is disposed downstream the reformer heat exchanger 5. In case the temperature of the feed gas that exits the reformer heat exchanger 5 is too low, the feed-back loop acts on the valve 11 by opening it further, such that more hot fluid of the hot stream can flow through the hot stream line 6a towards the reformer heat exchanger 5. In case the temperature of the feed gas that exits the reformer heat exchanger 5 is too high, the feed-back loop acts on the valve 11 by closing it a bit, such that less hot fluid can flow through the hot stream line 6a towards the reformer heat exchanger 5. After passing the reformer heat exchanger 5, the feed gas is further heated in the pre-heater 7, which is a heat exchanger that exchanges heat with the exhaust gas that leaves the electrochemical reactor 4 through line 3, such that it reaches a temperature that is acceptable for the electrochemical reactor 4.

In addition to the hot stream that is sent to the reformer heat exchanger 5, hot stream can be sent to a second pre-heater 10, which is a co-feed heat exchanger, to heat the co-fluid. In the envisaged operating mode, the co-fluid is supposed to provide oxygen ions that, by means of an electrochemical reaction, oxidizes the carbonaceous feed gas inside the electrochemical reactor 4. The amount of heat that is transferred to the co-fluid is controlled by a feed-back loop that, based on the temperature of the co-fluid after receiving heat from the hot stream in the heat exchanger 10, acts on the amount of heat that is generated by the device (not shown) that provides the hot stream, such that the co-fluid reaches a temperature that is acceptable for the electrochemical reactor 4. In case the temperature of the co-fluid is too low, more heat is provided by the hot stream to the co-feed heat exchanger 10 by acting on the hot stream. In case the temperature of the co-fluid is too high, less heat is provided by the hot stream to the co-feed heat exchanger 10 by acting on the hot stream, e.g. through opening and closing of valves. The heat capacity of the hot stream can either be altered by changing the temperature of the hot stream, or the amount of hot stream. In case the hot stream is provided by a burner, the amount of heat that is generated by the burner can be controlled by, for example, the amount of fuel that is provided to the burner, or by, for example, the amount of fuel and the amount of air that are provided to the burner, or by controlling the mixing ratio between two or more fluid streams with different temperatures.

Alternatively, instead of acting on the hot stream, the amount of co-fluid flow can be controlled to correct the co-fluid temperature .

More preferably, the feed-back loop that acts on the amount of hot stream that is provided to the system, not only responds to the temperature of the co-fluid after passing the heat exchanger 10, but also to the temperature gradient inside electrochemical reactor 4, for example on the difference between the temperature of the co-fluid temperature prior to entering the electrochemical reactor 4 and the temperature of the co-fluid after leaving the electrochemical reactor 4. In case the temperature gradient in the electrochemical reactor 4 is too high, too much Joule heat is generated in the electrochemical reactor 4 in relation to the heat that is being consumed by the endothermic conversion of hydrocarbons in the electrochemical reactor 4 and heat that is dissipated by the feed and co-feed. One option to realize a less steep temperature gradient is to increase the air flow, but this would involve higher energy losses as more co-feed has to be sent through the electrochemical reactor. Alternatively, this amount of consumed heat can, with adequate reformer temperature control, and without involving higher energy losses, be increased by increasing the amount of hydrocarbons that still remain in the carbonaceous feed after passing the reformer heat exchanger 5, by targeting a lower temperature after passing the reformer heat exchanger 5. Thus, in addition to the amount of hot stream that is provided to the system, the feed-back loop that acts on the co-fluid temperature also acts on the temperature of the feed after passing the reformer heat exchanger 5.

Considering that the system is being changed from an operation mode where only power is produced to one where both power and exhaust gas is being produced, by means of adequate exhaust gas post-processing, for example, by passing the gas through a water gas shift reactor and subsequent hydrogen extraction by e.g. PSA, the carbonaceous feed gas is increased. The increased feed gas flow will trigger a drop in the feed temperature after passing the reformer heat exchanger 5. This will cause the feed-back loop that responds to this temperature to open the valve 11 downstream the reformer heat exchanger 5 a bit more, with the aim to correct the temperature setpoint of the reformer heat exchanger. As more hot stream is now directed towards the reformer heat exchanger 5, less hot stream is consequently provided to the co-feed heat exchanger 10, which causes a drop in the co-fluid temperature downstream this heat exchanger 10. This will trigger the feed-back loop that acts on the hot stream supply to generate more hot stream, or to increase the temperature of the hot stream, such that the co-fluid temperature is corrected. As it is the aim to keep the amount of power that is being produced in the electrochemical reactor 4 the same, while the carbonaceous feed gas flow towards the electrochemical reactor 4 has been increased, the temperature inside the electrochemical reactor 4 will drop, as more heat is being consumed by the endothermic conversion of the hydrocarbons that exist in the feed stream. This can, with the help of adequate reformer temperature control, be corrected by increasing the setpoint f of the reformer heat exchanger exhaust temperature. Alternatively, or additionally, the arrangement allows for adjusting the reformer heat exchanger exhaust temperature to influence the amount of heat that is exchanged between the feed and the carbonaceous exhaust stream in the first preheater 7, in order to obtain a specific temperature of the exhaust stream after passing the first preheater 7 that is beneficial for improving the hydrogen yield in gas processing equipment, for example a water-gas shift reactor.

As another example of a system transient, consider that the system is changed from an operation mode where power is being produced from carbonaceous fuel to one where hydrogen is produced from steam. In this case, the direction of the electrical current that flows through the electrochemical reactor 4 has to be reversed. In some cases, it would therefore be beneficial to include an idling phase between the two operating modes, where the electric load that was applied during the power production mode is interrupted, before the operating mode where hydrogen is produced from steam is started. In the case where to feed exists of a mixture of natural gas and steam, the idling phase is used to reduce flow of natural gas, whilst the flow of steam is adjusted to a level that is required for the hydrogen production mode. After the flow adjustment, a reversed current is imposed on the electrochemical reactor 4, which allows for electrochemically converting the steam into hydrogen. In some other cases, this idling mode may be skipped, where prior to reversing current direction, the steam flow is adjusted whilst the electrochemical reactor is still used for power production.

With respect to the thermal management in the above case where no idling phase exists, it is anticipated that addition of more steam to the feed will cause the temperature of the reformer heat exchanger 5 to drop. Consequently, more heat will be provided to the reformer heat exchanger 5 in order to maintain the setpoint of the feed flow temperature after passing the reformer heat exchanger 5 by opening the valve 11 that is disposed in the hot stream line after exchanging heat with the feed flow in the reformer heat exchanger 5. Consequently, less heat is provided to the co-feed heat exchanger 10, which causes a drop in the co-fluid temperature downstream this heat exchanger 10. This will trigger the feed-back loop that acts on the hot stream supply to generate more hot stream, or to increase the temperature of the hot stream, such that the co-fluid temperature is corrected. Subsequently, the natural gas flow is switched off, which causes a reduction in the feed flow, which triggers a response to the feedback loop that acts on the valve 11 and the feedback loop that acts on the hot stream supply, as what was just described for the increase of the steam flow. Finally, the thermal balance will change again once the direction of the current that is imposed to the electrochemical reactor is inverted. In the case that the system was operated at exothermic conditions when the reactor was used for power production to a case that the system is used to produce hydrogen from steam at thermoneutral conditions, less heat will be produced inside the electrochemical reactor. Consequently, the temperature of the converted feed gas that leaves the electrochemical reactor drops, by which less heat is available to preheat the feed gas in the first preheater. This may be corrected by increasing the setpoint of the temperature of the feed gas after passing the reformer heat exchanger, and/or the setpoint of the co-feed after preheating in the co-feed heat exchanger.

In some cases when the system is operated as an electrolyser, a small percentage of hydrogen, for example 5 vol% of hydrogen, is added to the steam to prevent oxidation, and consequently deactivation, of the fuel electrode during electrolysis operation. The hydrogen may be added to the feed upstream the reformer heat exchanger, upstream the first preheater, or between the first preheater and the electrochemical reactor. The hydrogen may originate from a separate feed line, or from a recycle loop in case hydrogen or a hydrogen-rich gas is obtained downstream the electrochemical reactor from the feed gas that exited the electrochemical reactor. Alternatively, or additionally, the arrangement allows for adjusting the reformer heat exchanger exhaust temperature to influence the overall efficiency of the system, which specifically relates to the steam flow during electrolysis operation, the associated heat demand for fluid preheating, and the heat exchange efficiency in both the reformer heat exchanger 5 and the first preheater 7.

Advantageously, the operational mass flows and preheat-temperatures of the fluids are based on lookup tables; or are based on thermodynamic models, such as electrochemical, thermomechanical models, calculating a heat balance depending on the imposed operating conditions; or are based on real-time optimization routines or a data-driven model. This will allow for a reduction of the number of sensors that are required to control temperatures inside the electrochemical reactor.

For example, data relating to the current state of the system can be obtained from sensors, the data can then be correlated to look up table or models and the operational mass flows and the preheat-temperatures can be adjusted in order to ensure safe working of the electrochemical device.

It goes without saying that the above control scheme is just an example and that control schemes to handle transient modes towards other operating modes are not limited to this example.

## Claims

1. An electrochemical device (1) comprising:
- at least one, preferably a plurality of, electrochemical cell (4) comprising a fuel electrode an oxygen electrode and a membrane,
- at least one fluid inlet line (2) leading to the fuel electrode of the at least one electrochemical cell (4),
- at least one fluid outlet line (3), exiting the fuel electrode of the at least one electrochemical cell (4),
- a reformer with an integrated heat exchanger (5) located upstream of the at least one electrochemical cell (4),
- at least one hot stream line (6) to provide heat to the fluid inlet line (2),
- at least two temperature sensors (T) for detecting the inlet temperature of the at least one fluid and/or for detecting the at least one outlet temperature of the at least one fluid, preferably at a reformer inlet side and/or a reformer outlet side,
**characterized in that** a first pre-heater (7) is arranged between the reformer (5) and the at least one electrochemical cell (4), wherein the fluid inlet line (2) is in fluid communication with the reformer (5) and/or first preheater (7) and wherein the hot stream line (6) is in fluid communication with reformer (5) and/or the first preheater (7).

2. The electrochemical device (1) according to claim 1 wherein the first pre-heater (7) is a heat exchanger.

3. The electrochemical device (1) according to claim 1 or 2,
wherein the fluid inlet line (2) comprises temperature sensor (T) at the first pre-heater inlet side and/or the first pre-heater outlet side.

4. The electrochemical device (1) according to one of the previous claims, wherein the hot stream line (6) is a splitted line with a first flow path (6a) to the reformer (5) and with a second flow path (6b) to the first pre-heater (7) and/or a second pre-heater (10).

5. The electrochemical device (1) according to claim 4, wherein at least one valve (11) for controlling the flow volume in the first and second flow paths (6a, 6b) is located in the hot stream line (6a', 6b') downstream of the reformer (5) and/or the first pre-heater (7) and/or the second preheater (10).

6. The electrochemical device (1) according to one of the previous claims wherein the device (1) comprises a co-feed line (8) to provide a co-fluid, preferably an oxidant or sweep-gas, to the at least one electrochemical cell (4).

7. The electrochemical device (1) according to one of the previous claims wherein the device (1) is operatable in the following operation modes: power and steam conversion to hydrogen, carbonaceous fuel to power, carbonaceous fuel to power and hydrogen, carbonaceous fuel to hydrogen.

8. The electrochemical device (1) according to one of the previous claims, wherein the temperature sensors (T) are connected to a feedback control loop.

9. The electrochemical device (1) according to one of the previous claims, wherein the at least one electrochemical cell (4) is a reversible solid oxide cell.

10. Heat management method for an electrochemical device (1), preferably an electrochemical device (1) according to one of claims 1 to 9, the method comprises the steps of:
a) Providing an electrochemical device (1) comprising:
- at least one, preferably a plurality of, electrochemical cell (4) comprising a fuel electrode, an oxygen electrode and a membrane,
- at least one fluid inlet line (2) leading to the fuel electrode of the at least one electrochemical cell (4),
- at least one fluid outlet line (3), exiting the fuel electrode of the at least one electrochemical cell (4),
- at least a first co-fluid-line leading to the oxygen electrode of the at least one electrochemical cell,
- a reformer with an integrated heat exchanger (5) located upstream to the at least one electrochemical cell (4),
- at least one hot stream line (6) to provide heat to the fluid inlet line (2),
- at least two temperature sensors (T) for detecting the inlet temperature of the at least one fluid and/or for detecting the at least one outlet temperature of the at least one fluid, preferably at a reformer inlet side and/or a reformer outlet side,
- a first pre-heater (7) arranged between the reformer (5) and the at least one electrochemical cell (4), wherein the fluid inlet line (2) is in fluid communication with the reformer (5) and/or first preheater (7) and wherein the hot stream line (6)is in fluid communication with the reformer (5) and/or first pre-heater (7),
b) Providing at least one fluid to the reformer (5) and/or the first pre-heater (7),
c) Providing at least one hot stream to the reformer (5) and/or the first preheater (7),
d) Allowing heat exchange between the at least one fluid and the hot stream in the reformer (5) and/or the first preheater (7) to heat the at least one fluid,
e) Optionally allowing heat exchange between the hot stream and a co-fluid,
f) Providing the heated at least one fluid to the at least one electrochemical cell (4).

11. The method of claim 10, wherein the method further comprises the step of determining the temperature of the at least one fluid before entering the reformer (5) at the reformer's inlet side and determining the temperature of the at least one fluid at the reformers outlet side and/or determining the temperature of the at least one fluid before entering the first pre-heater (7) at the first preheater's inlet side and determining the temperature of the at least one fluid at the first preheater's outlet side to determine the amount of hot stream supplied to the reformer and/or to the first pre-heater.

12. The method according to claim 10 or 11, wherein the hot stream is splitted and provided to the reformer (5) and the first pre-heater (7) and/or a second pre-heater (10).

13. The method of claim 12, wherein the flow volume of the hot stream provided to the reformer (5) and/or the first preheater (7) and/or the second pre-heater (10) is adjusted by at least one valve (11) located in the hot stream line (6) downstream to the reformer (5) and/or the first preheater (7) and/or the second pre-heater (10).

14. The method according to one of claims 10 to 13, wherein the method comprises the step of converting carbonaceous fuel to power and hydrogen or converting carbonaceous fuel to hydrogen or converting power and steam to hydrogen.

15. The method according to one of claims 10 to 13, wherein the method comprises the step of converting carbonaceous fuel to power.
